# EUROPEAN PATENT APPLICATION

(11) **EP 1 028 392 A2**
(43) Date of publication of application: **16.08.2000**
(21) Application number: 99117413.7
(22) Date of filing: 07.09.1999
(51) Int. Cl.: G06T 7/00

(54) **Inspection method and inspection system**

(30) Priority: 12.02.1999 JP 3490999
(71) Applicant: Keyence Corporation, Osaka-shi, Osaka 533-8555 (JP)
(72) Inventor: Inagaki, Daisuke, c/o Keyence Corporation, Osaka-shi, Osaka 533-8555 (JP); Saeki, Kazuhito, c/o Keyence Corporation, Osaka-shi, Osaka 533-8555 (JP); Ikushima, Yasuhisa, c/o Keyence Corporation, Osaka-shi, Osaka 533-8555 (JP)
(74) Representative: HOFFMANN - EITLE

(57) **Abstract**

An inspection method of comparing an image obtained by image-picking up an object to be inspected with a reference image. An image of an inspection reference object is picked up by an imaging device, and a derived digital image signal is displayed as a display image on a display device. Then, if adjustment of a display position of the display image being displayed on the display device is needed, the coordinate transformation process for executing rotation and/or translating of the display image is carried out. Thus, a direction to be inspected of the image of the inspection reference object, e.g., a direction of a straight line passing through two points if a distance between the two points is to be inspected, is transformed so as to coincide with the longitudinal or lateral direction. Then, the display image whose display position has been adjusted is recorded as a reference image, and the recorded reference image is read when it is compared with an image obtained by image-picking up an object to be inspected.

## Description

### BACKGROUND OF THE INVENTION

### 1. Field of the Invention

The present invention relates to an inspection method of comparing an image obtained by image-picking up an object to be inspected with a reference image, and an inspection system for embodying the same.

### 2. Description of the Related Art

An inspection system using the image processing has been employed as an on-line or off-line method of inspecting the quality of an outer appearance, e.g., an external shape, printing condition, and the like, of an object to be inspected such as an assembly or a part.

In such inspection system, an image of an inspection reference object is picked up by an imaging device using a CCD (Charge Coupled Device) and such picked-up image is used as a reference image. Then, a rectangular inspection window whose one side is parallel with a vertical or horizontal end of a screen is opened on the screen of a display device such as a liquid crystal monitor which displays the reference image, and then a portion to be inspected of the reference image is enclosed with the inspection window.

Then, the portion to be inspected in the inspection window is scanned vertically or horizontally to check the luminance of pixels. For example, if the distance between two points is to be inspected, the two points are enclosed with the inspection window and then scanning is executed in the inspection window along the straight line connecting the two points. Then, the two points are detected and the number of pixels contained between the two points is counted to detect the distance. In this manner, while using values of a distance, an area, and the like detected by scanning the portions to be inspected as reference values, inspection conditions such as a position of the inspection window and a scanning direction, and the reference values detected at this time are recorded.

Next, an image of an object to be inspected serving as an inspection object is picked up, and then rotation and/or translating (parallel translation) of the image is effected such that the display position of the object to be inspected in the picked-up image can be adjusted to correspond to the position of the inspection reference object in the reference image. Then, the portion to be inspected in the inspection window being opened is scanned based on the recorded inspection conditions, and then the derived value is compared with the reference value to output the result.

However, in the conventional inspection system, the scanning direction of the portion to be inspected is limited to the vertical or horizontal direction of the screen. Therefore, in the stage that the reference value is detected by scanning the reference image which is obtained by picking up the inspection reference object, if the distance between two points of the reference image is inspected, for example, a positional relationship between the inspection reference object and the imaging device must be adjusted, while monitoring the image being displayed on the display device, such that the scanning direction coincides with the direction of the straight line which passes through the two points. As a result, there has been the problem that a large amount of working is needed.

Especially, when the reference image is obtained by picking up the image of one of the object to be inspected which are carried on the production line as the inspection reference object, such image must be picked up after the production line has been stopped temporarily and then the inspection reference object has been adjusted at the optimal position. Therefore, in addition to the problem of the working amount, there has been the problem that loss of the production time is caused to prevent improvement of the productivity.

### SUMMARY OF THE INVENTION

The present invention has been made in view of the above circumstances, and it is an object of the present invention to provide an inspection method capable of achieving reduction in the working amount and improvement of the productivity, and an inspection system for embodying the same.

According to a first aspect of the present invention, there is provided an inspection method of comparing an image obtained by image-picking up an object to be inspected with a reference image, comprising the steps of: picking up an image of an inspection reference object serving as a reference of the object to be inspected; adjusting position data indicating a display position of an image obtained by image-picking up the inspection reference object on a display device; recording an image whose position data has been adjusted as a reference image; picking up an image of the object to be inspected; adjusting position data such that the image obtained by image-picking up the object to be inspected corresponds to the reference image; and comparing the corresponded image with the reference image.

According to a second aspect of the present invention, there is provided an inspection system for comparing an image obtained by image-picking up an object to be inspected with a reference image, comprising: means for adjusting position data indicating display positions of the image obtained by image-picking up the object to be inspected and an image obtained by image-picking up an inspection reference object serving as a reference of the object to be inspected on a display device; means for storing the image obtained by image-picking up the inspection reference object, whose position data have been adjusted, as the reference image; and means for comparing the image to be inspected, whose position data have been adjusted, with the reference image.

### BRIEF DESCRIPTION OF THE DRAWINGS

FIG.1 is a block diagram showing a configuration of an inspection system according to the present invention.

FIG.2 is a flowchart showing processes of the inspection system according to the present invention.

FIG.3 is a flowchart showing processes of the inspection system according to the present invention.

FIG.4 is a flowchart showing processes of the inspection system according to the present invention.

FIG.5 is a view illustrating a display image before conversion of position data.

FIG.6 is a view illustrating a display image after conversion of position data.

### DETAILED DESCRIPTION OF THE PREFERRED EMBODIMENT

An embodiment of the present invention will be described in detail with reference to the accompanying drawings hereinafter.

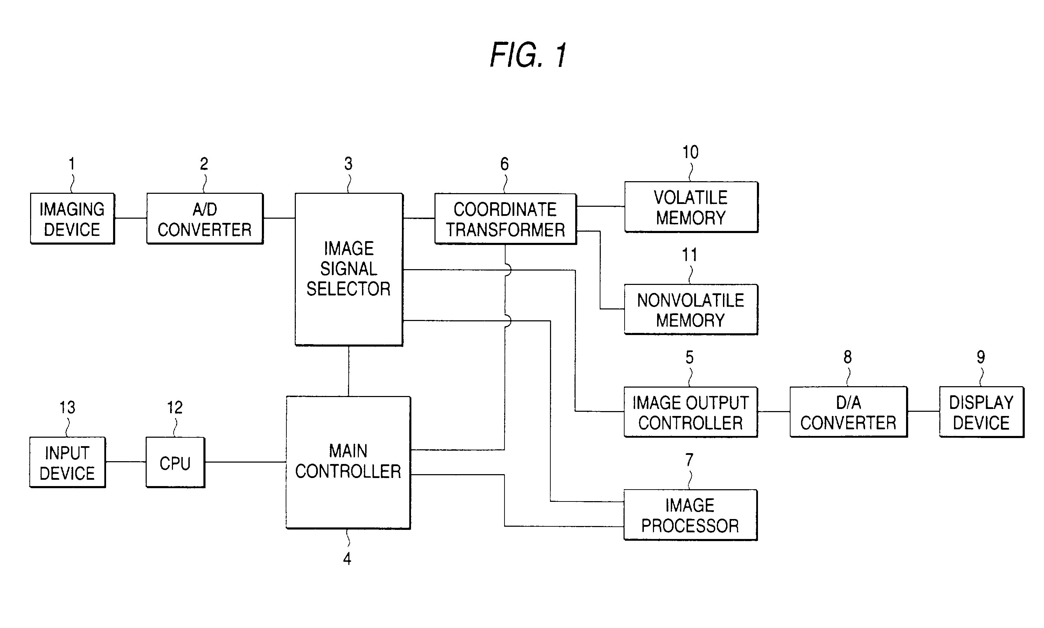

FIG.1 is a block diagram showing a configuration of an inspection system according to the present invention. In FIG.1, reference numeral 1 denotes an imaging device using a CCD, which picks up both images of an object to be inspected carried on the production line and an inspection reference object serving as a reference of the object to be inspected. The imaging device 1 supplies an analog image signal which is obtained by picking up the image to an A/D converter 2.

The A/D converter 2 converts the analog image signal which is received from the imaging device 1 into a digital image signal, and then supplies the converted digital image signal to an image signal selector 3.

When receives a control signal which instructs transmission/reception of the digital image signal from a main controller 4, the image signal selector 3 selects either a coordinate transformer 6 or a image processor 7 as the destination of the digital image signal. The coordinate transformer 6 transforms display position data such as the coordinate indicating the position to be output as the display image by converting recording position data indicating the position to which the digital image signal is recorded. The image processor 7 executes various image processings such as comparison, inspection, and the like of display positions of both images of the inspection reference object and the object to be inspected.

Also, when receives the control signal, the image signal selector 3 selects any one of an image output controller 5, the coordinate transformer 6 and the image processor 7 as the destination of the digital image signal sent from the coordinate transformer 6 or the image processor 7, and then sends the digital image signal to the selected device.

The image output controller 5 generates a video signal by converting the digital image signal being received from the image signal selector 3 into a digital signal in a bit map format, then generates an output video signal by combining the inspection window and display elements such as characters with the video signal, and then sends the output video signal to a D/A converter 8. The D/A converter 8 converts the output video signal into an analog image signal, and then sends the analog image signal to a display device 9 such as a liquid crystal monitor. The display device 9 outputs the analog image signal as a display image.

The coordinate transformer 6 relays the digital image signal received from the image signal selector 3 to send to a volatile memory 10. The volatile memory 10 records the digital image signal in a recording position. In this case, recording position data indicating the recording position of the volatile memory 10 corresponds to display position data such as the coordinate indicating the display position of the display device 9. Thus, the coordinate indicating the display position can be transformed by converting the recording position data. Also, the coordinate transformer 6 relays the digital image signal when, based on the control signal supplied from the main controller 4, such coordinate transformer 6 reads the digital image signal recorded in the volatile memory 10 and then sends it to the image signal selector 3 to display on the display device 9.

In the event that the coordinate transformer 6 relays the digital image signal, when it receives the control signal instructing the coordinate transformation from the main controller 4, it converts the recording position data of the digital image signal read from the volatile memory 10 and performs the coordinate transformation in which the rotation and/or the translating of the display image is conducted, based on the control signal. In this manner, the coordinate transformation process is carried out when the display position must be adjusted to the optimal position to execute the processes such as external output, image processing, and various inspections, on the basis of the picked-up image of the inspection reference object or the object to be inspected.

The digital image signal obtained by picking up the image of the inspection reference object or the digital image signal obtained by applying the coordinate transformation to such digital image signal is recorded in a nonvolatile memory 11 as the reference image based on the control signal from the main controller 4, and then is read from the nonvolatile memory 11 when the processes such as the comparison, the inspection and the image processing are carried out.

Based on the control signal supplied from the main controller 4 to instruct the image processing, the image processor 7 applies various inspections and the image processing to the digital image signal supplied from the image signal selector 3, and then sends the result to the image signal selector 3 or the main controller 4.

The main controller 4 is connected to a CPU 12, which controls the overall inspection system, via a control bus. The CPU 12 receives operation signals from an input device 13 and then executes various processes. The input device 13 is employed to select a function menu such as the reference image recording and the inspection, and to operate the rotation/translating and the like. The CPU 12 has a volatile memory which records temporary data being generated during the process and information such as the inspection conditions.

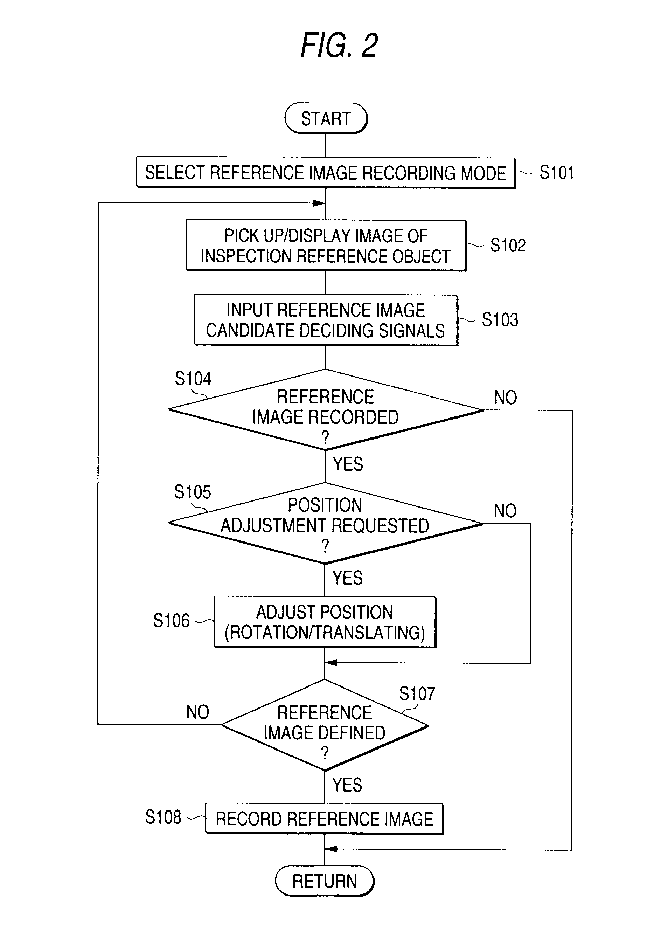

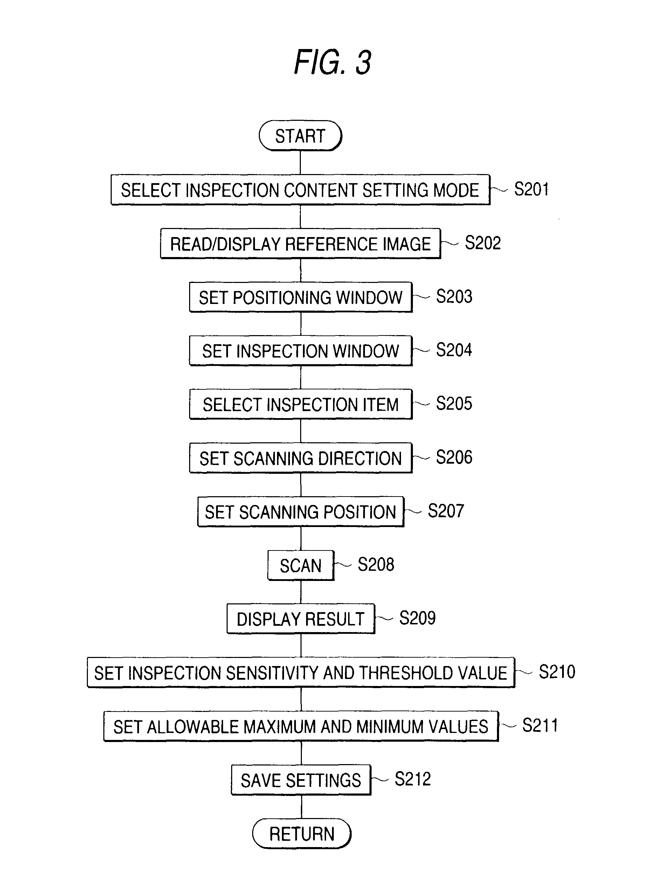

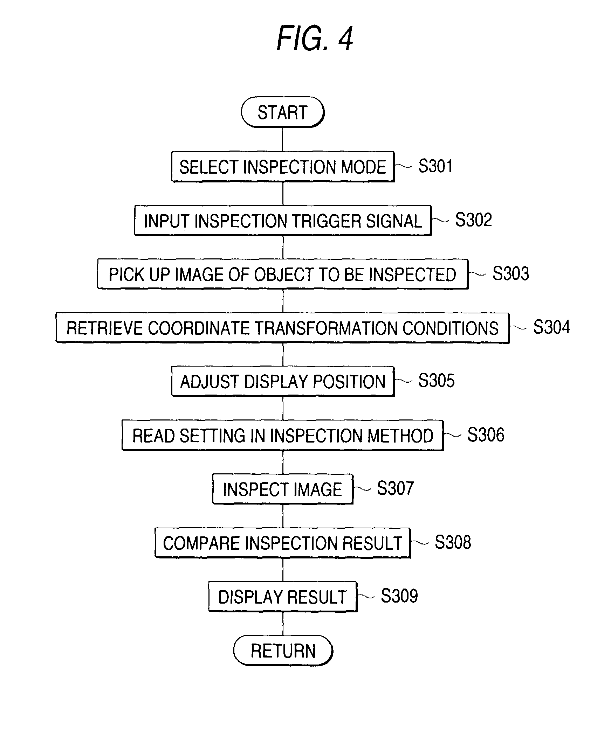

Next, an inspection method of the present invention will be described with reference to flowcharts showing the processes of the inspection system in FIGS.2 to 4.

If "reference image recording" of the function menu is selected, the process in a reference image recording mode is carried out (step S101).

Then, the image of the inspection reference object is picked up by the imaging device 1, and the derived digital image signal of the inspection reference object is then displayed as the display image on the display device 9 (step S102). Update of the display image is executed at a predetermined period or when the control signal instructing the update of the display image is input from the input device 13.

As the inspection reference object, any one of the objects to be inspected carried on the production line or a reference sample which is prepared particularly may be employed.

Then, reference image candidate deciding signals are input from the input device 13 (step S103). At that time, it is requested to check whether or not the display image which is being displayed on the display device 9 should be recorded as the reference image (step S104).

If the display image should not be recorded as the reference image (if NO in step S104), the reference image recording mode is canceled. In contrast, if the display image should be recorded as the reference image (if YES in step S104), it is requested to check whether or not adjustment of the display position by using the coordinate transformation of the display image is needed (step S105).

If adjustment of the display position is needed (if YES in step S105), such adjustment of the display position is carried out by the coordinate transformation process to execute the rotation and/or the translating of the display image based on the input from the input device 13 (step S106). At this time, the term "rotation" means the coordinate transformation process in which the display image is rotated upon a center of the display image as a center of rotation by any angle in any direction, and the term "translating" means the coordinate transformation process in which the display image is translated by any distance in the longitudinal or lateral direction. According to these coordinate transformation processes, the image of the inspection reference object can be displayed on an almost center area of the display device 9 in the situation that the direction of the image to be inspected, e.g., the direction of the straight line which passes through two points if the distance between the two points is inspected, corresponds to the longitudinal or lateral direction of the screen. In this manner, in the center area of the display device 9, the display position at which the direction of the image to be inspected is correlated with the longitudinal or lateral direction of the screen is most suitable for the image processing, various inspections, and the like.

Also, if the rotation or the translating is carried out, the user operates the input device 13 while monitoring the screen of the display device 9. Consequently, the display position can be adjusted easily rather than the case where an amount of translation is decided by inputting numerical values, for example.

If the adjustment of the display position is not needed in step S105 (if NO in step S105) or if the coordinate transformation has been completed in step S106, it is requested to check whether or not the display image should be defined as the reference image (step S107). If the display image should be defined (if YES in step S107), the display image is recorded in the nonvolatile memory 11 as the reference image (step S108). Thus, the recording process of the reference image has been completed. In contrast, if the display image should not be defined (if NO in step S107), the process returns to step S102. Then, the processes set forth in steps S102 to S107 are repeated.

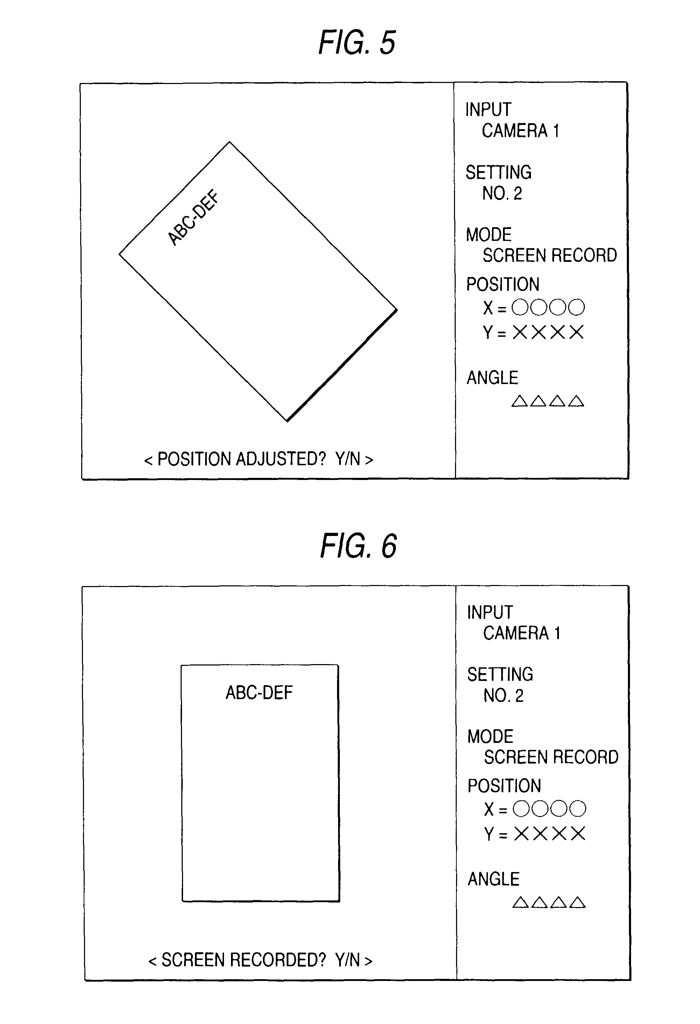

FIG.5 is a view illustrating a display image before conversion of position data. FIG.6 is a view illustrating a display image after conversion of position data. In FIG.5, the rectangular inspection reference object is displayed in the tilted condition. For example, if an outer dimension of a short side of this rectangle is inspected as the reference value, there is such a drawback that the inspection cannot be conducted, as it is, since the scanning direction is limited to the longitudinal or lateral direction. Therefore, as shown in FIG.6, respective directions of a long side and a short side of the inspection reference object are positioned to agree with the longitudinal and lateral directions of the display device 9 by rotating the display image shown in FIG.5 rightward by about 45 degrees, and then the display image is recorded as the reference image.

In this manner, according to the inspection method of the present invention, it is possible to adjust the position of the inspection reference object on the screen by the image processing when the reference image is to be obtained by picking up the image of the inspection reference object.

If "inspection content setting" of the function menu is selected, the process in an inspection content setting mode is carried out (step S201).

The reference image recorded in the nonvolatile memory 11 is read and then displayed as the display image on the display device 9 (step S202).

Then, the rectangular positioning window whose one side is set in parallel with the longitudinal or lateral direction of the screen is opened at the position to enclose patterns of characters, numerals, and the like, which are employed to position the display image, and then the pattern enclosed with the positioning window is recorded as a positioning pattern (step S203).

Then, the rectangular inspection window whose one side is set in parallel with the longitudinal or lateral direction of the screen is opened at the position to enclose the portion to be inspected on the displayed reference image, and then the position of the opened inspection window is set as a relative position with respect to the positioning pattern (step S204).

Selection of inspection items such as the distances of an external dimension and an internal dimension, the area, and the like is requested (step S205). Setting is performed based on the selected inspection item. In the following, an embodiment in which the external dimension is selected as the inspection item will be described.

First, it is requested for the user to set the portion to be inspected. When receives the request, the user sets any one of the longitudinal and lateral directions as a scanning direction (step S206). Then, a start position and an end position of the portion to be inspected in scanning are set in the inspection window (step S207).

The display image is then scanned to check the luminance of the pixels which are aligned from the designated start position to the designated end position (step S208). Then, the scanning result is calculated by virtue of the differentiation, and such calculation result is displayed on the display device 9 so as to be superposed on the display image (step S209). At this time, if such display is expressed by the graphic representation like the emission lines each having a length which corresponds to the calculation result, or the like, the user can recognize intuitively the calculation results. Also, normally the portion having the largest absolute value as the calculation result, i.e., the point having a large amount of change, can be defined as an outer edge portion which corresponds to a change between the inspection reference object and the background. Therefore, the external dimension can be calculated by detecting two points having the large absolute value and then counting the number of pixels being aligned between the two points.

While monitoring the image displayed on the display device 9, the user sets an inspection sensitivity and a threshold value such that the two points corresponding to the outer edge portions of the inspection reference object can be detected (step S210). In addition, an allowable maximum value and an allowable minimum value of the external dimension which is detected as the number of pixels between the two points are set (step S211).

Then, these settings are saved (step S212). Thus, the setting in the inspection method has been completed.

If "inspection" of the function menu is selected, the process in an inspection mode is carried out (step S301).

In the inspection mode, an inspection trigger signal is input when the object to be inspected is located within the range in which the image can be picked up by the imaging device 1 (step S302). Then, the digital image signal of the object to be inspected is obtained by picking up the image of the object by the imaging device 1 and then is taken into the inspection system (step S303).

At this time, the picking-up of the image may be conducted by either the inspection trigger signal which is input from the user by using the input device 13 or the inspection trigger signal which is input from the previously provided sensor for detecting that the object to be inspected which is being carried on the production line enters into the imaging range of the imaging device 1.

The patterns corresponding to positioning patterns of the recorded reference image are retrieved from the obtained digital image signal of the object to be inspected, and then coordinate transformation conditions for adjusting the display position are detected (step S304). This retrieval is conducted to detect the transformation conditions which can render both the picked-up image of the object to be inspected and the reference image to coincide with each other by repeating the coordinate transformation process, which rotates and/or parallel translates the input image of the object to be inspected and/or the reference image read from the nonvolatile memory 11 based on predetermined conditions, and then comparing positioning patterns of the picked-up image of the object to be inspected and the reference image with each other.

Then, the display position is adjusted by executing the coordinate transformation by using the coordinate transformer 6 based on the detected coordinate transformation conditions such that the input image of the object to be inspected corresponds to the reference image (step S305). Then, the saved setting in the inspection method is read (step S306). Then, the image of the object to be inspected whose display position has been adjusted is inspected according to the inspection method being read out (step S307).

For example, if a length of the external dimension is inspected, differential calculation is carried out by scanning from the set start position to the set end position along the set direction, then two points indicating outer edge portions of the object to be inspected are detected based on the calculated result, and then the number of pixels which are aligned between the two points is counted, whereby the length of the external dimension can be inspected.

Then, the inspection result such as the number of pixels which are aligned between the two points is compared with the allowable maximum value and the allowable minimum value which have been set based on the reference image (step S308). Then, it is decided whether or not inspection items of the object to be inspected are within tolerances, and then the result is displayed on the display device 9 (step 5309). Especially, if the decision result is out of the tolerances, early finding and early processing of the defect are made possible by informing the user of the decision result by outputting means such as a speaker, an LED, and the like in addition to the display on the display device 9.

In the above embodiment, for the purpose of a higher processing speed, respective processes such as the coordinate transformation and the image processing are constructed by hardware. However, the present invention is not limited to such embodiment. Another embodiment can be adopted wherein respective processes may be constructed by software which is described by program codes which cause the computer to execute respective processes.

As described above, according to the inspection method and the inspection system of the present invention, since the reference image is obtained by adjusting the position data which indicate the display position of the picked-up image of the inspection reference object on the display device, reference values can be detected after the scanning direction along which the portions to be inspected in the reference image are scanned has been transformed, e.g., the scanning direction has been transformed in parallel with the direction of the straight line passing through two points when the distance between the two points is inspected.

In this manner, the display position of the inspection reference object in the picked-up image can be transformed by the image processing. Therefore, the operation for adjusting the positional relationship between the inspection reference object and the imaging device while monitoring the image displayed on the display device can be omitted, and thus an amount of working can be reduced.

Moreover, since there is no necessity to temporarily stop the production line, excellent advantages can be achieved, e.g., loss of the production time can be eliminated, and the productivity can be improved.

## Claims

1. An inspection method of comparing an image obtained by image-picking up an object to be inspected with a reference image, comprising the steps of:
picking up an image of an inspection reference object serving as a reference of the object to be inspected;
adjusting position data indicating a display position of an image obtained by image-picking up the inspection reference object on a display device;
recording an image whose position data has been adjusted as a reference image;
picking up an image of the object to be inspected;
adjusting position data such that the image obtained by image-picking up the object to be inspected corresponds to the reference image; and
comparing the corresponded image with the reference image.

2. The inspection method according to claim 1, wherein the step of adjusting the position data of the image obtained by image-picking up the inspection reference object is to adjust a rotation or a translating of the image.

3. The inspection method according to claim 1, wherein the comparing step is to compare respective pixels constituting the image to be inspected and the reference image, and the step of adjusting the position data of the image obtained by image-picking up the inspection reference object is to adjust an alignment direction of respective pixels to be compared to a predetermined direction.

4. An inspection system for comparing an image obtained by image-picking up an object to be inspected with a reference image, comprising:
means for adjusting position data indicating display positions of the image obtained by image-picking up the object to be inspected and an image obtained by image-picking up an inspection reference object serving as a reference of the object to be inspected on a display device;
means for storing the image obtained by image-picking up the inspection reference object, whose position data have been adjusted, as the reference image; and
means for comparing the image to be inspected, whose position data have been adjusted, with the reference image.

5. The inspection system according to claim 4, wherein the means for adjusting the position data of the image obtained by image-picking up the inspection reference object includes means for rotating or translating the image.

6. The inspection system according to claim 4, wherein the comparing means includes means for comparing respective pixels constituting the image to be inspected and the reference image, and the means for adjusting the position data of the image obtained by image-picking up the inspection reference object includes means for correlating an alignment direction of respective pixels to be compared with a predetermined direction.
